# EUROPEAN PATENT APPLICATION

(11) **EP 1 793 597 A1**
(43) Date of publication of application: **06.06.2007**
(21) Application number: 05026115.5
(22) Date of filing: 30.11.2005
(51) Int. Cl.: H04N 5/58, H04N 5/445

(54) **Display system and displaying method capable of auto-adjusting display brightness**

(71) Applicant: ASUSTeK Computer Inc., Peitou Taipei (TW)
(72) Inventor: Chung, Show-Nan, Peitou, Taipei (TW)
(74) Representative: Schaeberle, Steffen

(57) **Abstract**

A display system includes a remote control and a display apparatus. The remote control includes a photo sensor, a particular button and a wireless transmitting module. The display apparatus includes a screen, a wireless receiving module and a microprocessor. When the particular button is triggered, the photo sensor senses a brightness of the environment in which the remote control is located, and then an environment brightness value is generated accordingly. The wireless transmitting module outputs the environment brightness value to the wireless receiving module by wireless transmission. The wireless receiving module outputs the environment brightness value to the microprocessor. The microprocessor adjusts a display brightness of the screen according to the environment brightness value.

## Description

This application incorporates by reference of Taiwan application Serial No.94105117, filed February 21, 2005, the subject matter of which is incorporated herein by reference.

### BACKGROUND OF THE INVENTION

### Field of the Invention

The invention relates in general to a display system, and more particularly to a display system capable of auto-adjusting a display brightness.

### Description of the Related Art

The televisions have played an important role in the modern daily life. The method of adjusting the display brightness of the television is made by the adjusting control disposed on the television or by the adjusting control disposed on a remote control. The display brightness of the television is adjusted in order to brighten the displayed images by adjusting the adjusting control on the television or the remote control when the environment in which the television is located brightens. On the contrary, the display brightness is adjusted in order to darken the displayed images and provide a comfortable watching effect by adjusting the adjusting control on the television or the remote control when the environment darkens. However, because the user has to adjust the display brightness of the television manually, the user may feel inconvenience in operation.

### SUMMARY OF THE INVENTION

It is therefore an object of the invention to provide a display system capable of auto-adjusting a display brightness of the display apparatus in the display system by sensing a brightness of environment in which a remote control is located, which makes the user feel more comfortable when watching the display apparatus.

The invention achieves the above-identified object by providing a display system including a remote control and a display apparatus. The remote control includes a photo sensor, a particular button and a wireless transmitting module. The display apparatus includes a screen, a wireless receiving module and a microprocessor. When the particular button is triggered, the photo sensor senses a brightness of the environment in which the remote control is located, and an environment brightness value is generated accordingly. The wireless transmitting module outputs the environment brightness value by wireless transmission. The screen is used for image displaying. The wireless receiving module receives the environment brightness value. The microprocessor adjusts the display brightness of the screen according to the environment brightness value.

The display apparatus further includes a memory for storing a look-up table. The look-up table records a relationship between the environment brightness value and the display brightness. The microprocessor adjusts the display brightness of the display apparatus according to the environment brightness value and the look-up table.

Other objects, features, and advantages of the invention will become apparent from the following detailed description of the preferred but non-limiting embodiment. The following description is made with reference to the accompanying drawings.

### BRIEF DESCRIPTION OF THE DRAWING

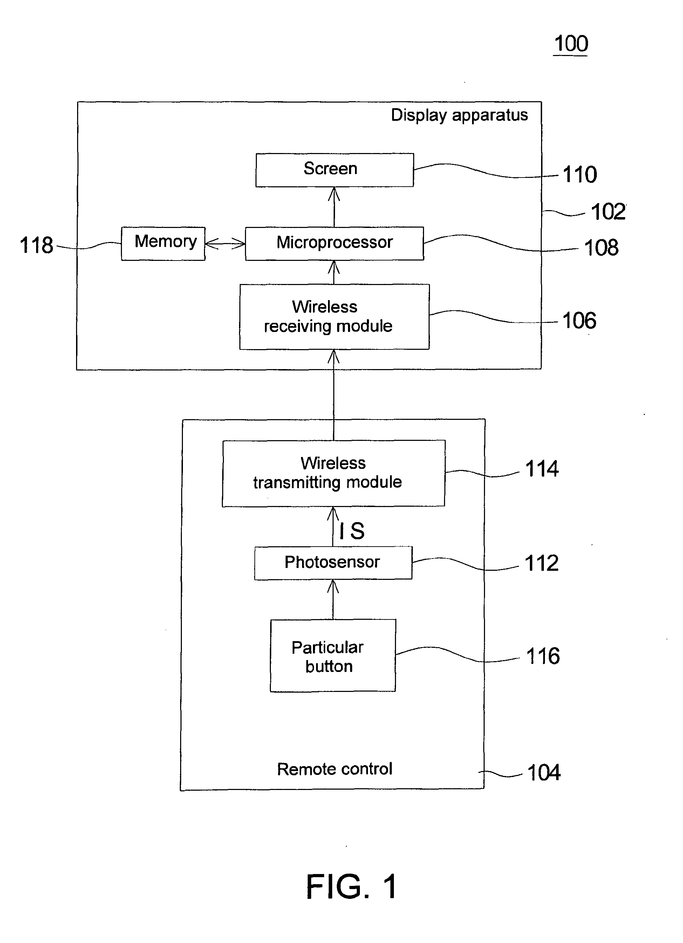

FIG. 1 is a block diagram showing a display system capable of auto-adjusting display brightness according to a preferred embodiment of the invention.

### DETAILED DESCRIPTION OF THE INVENTION

The embodiment discloses a display system capable of auto-adjusting a display brightness of a display apparatus in the display system as the environment brightness changes, such that the user feels more comfortable when watching the display apparatus and the inconvenience in operation is reduced.

The display system includes a display apparatus and a remote control having a photo sensor. When a particular button of the remote control is triggered, the photo sensor senses a brightness of the environment in which the remote control is located, to generate an environment brightness value. Then the environment brightness value is outputted to the display apparatus by wireless transmission. The display apparatus adjusts the display brightness of the display apparatus according to the environment brightness value.

FIG. 1 is a block diagram showing a display system capable of auto-adjusting display brightness according to a preferred embodiment of the invention. Referring to FIG. 1, the display system 100 includes a display apparatus 102 and a remote control 104. The display apparatus 102 includes a wireless receiving module 106, a microprocessor 108, a screen 110 and a memory 118. The remote control 104 includes a photo sensor 112, a wireless transmitting module 114 and a particular button 116. The display apparatus 102 is preferably a television, such as a liquid crystal television, a plasma television or a cathode ray tube (CRT) television.

When the particular button 116 of the remote control 104 is triggered, the photo sensor 112 senses the brightness of the environment in which the photo sensor 112 is located, and then an environment brightness value IS is generated accordingly. The wireless transmitting module 114 outputs the environment brightness value IS by wireless transmission.

The screen 110 of the display apparatus 102 is used for image displaying. The wireless receiving module 106 is used for receiving the environment brightness value IS. The microprocessor 108 is used for receiving the environment brightness value IS outputted from the wireless receiving module 106, and adjusting the display brightness of the screen 110 according to the environment brightness value IS.

The photo sensor 112 is implemented by, for example, a light dependent resistor or a photo diode. The photo sensor 112 is preferably disposed at a proper position of the remote control 104, which is advantageous to the sensing of the brightness of environment. When the particular button 116 is triggered, the photo sensor 112 senses the brightness of environment and the corresponding environment brightness value IS is outputted to the wireless transmitting module 114. When the particular button 116 is not triggered, it is preferred that the photo sensor 112 does not sense the brightness of the environment in order to save the power of the remote control 104.

The particular button 116 may be particularly provided for the user to select to perform the automatic light-sensing function, or may be one of operation buttons of the remote control capable of performing other functions. For example, these operation buttons can control the volume or the channel of the display apparatus 102. After the particular button 116, which is one of the operation buttons, is triggered, the wireless transmitting module 114 transmits the corresponding operation signal in a wireless manner such that the display apparatus 102 executes the corresponding operation, and the wireless transmitting module 114 also transmits the environment brightness value IS to the display apparatus 102.

In this embodiment, the wireless transmitting module 114 includes, without limitation to, an infrared transmitting module or a bluetooth wireless transmitting module. The wireless receiving module 106 receives the environment brightness value IS outputted by the wireless transmitting module 114 in a wireless manner, and transmits the environment brightness value IS to the microprocessor 108. The wireless receiving module 106 may be, for example, an infrared receiving module or a bluetooth wireless receiving module.

The display apparatus 102 further includes the memory 118, such as an EEPROM (Electrically Erasable Programmable Read-Only Memory). The memory 118 stores a look-up table, which records a relationship between the environment brightness value IS and the display brightness of the screen 110. The relationship may be the relationship between the experimental environment brightness value IS and the preferred display brightness (the default display brightness) of the screen 110 before the product is shipped out, or the re-adjusted and set relationship between the environment brightness value IS and the display brightness of the screen 110 according to personal preference. The microprocessor 108 adjusts the display brightness of the screen 110 according to the look-up table and the environment brightness value IS.

When the user uses the display apparatus 102 in a bright environment, the photo sensor 112 senses the brightness of the environment in which the photo sensor 112 is located after the particular button 116 is triggered. Because the environment in which the photo sensor 112 is located is brighter, the environment brightness value IS outputted by the photo sensor 112 is higher. The microprocessor 108 adjusts the display brightness of the screen 110 of the display apparatus 102 to a higher brightness according to the look-up table. For example, when the display apparatus 102 is a liquid crystal television, the microprocessor 108 adjusts the driving voltage for driving the backlight module of the liquid crystal television to increase the power supplied for the backlight module and thus improve the display brightness of the screen 110 such that the user feels more comfortable when uses the display apparatus 102.

Similarly, when the user uses the display apparatus 102 in a darker environment, the user can trigger this particular button 116 to enable the photo sensor 112 to sense the brightness of the environment in which the photo sensor 112 is located, such that the display apparatus 102 automatically darkens the display brightness of the screen 110 to make the user feels more comfortable when uses the display apparatus 102.

When the user uses the remote control 104, the remote control 104 is mostly carried on the user's hand. At this time, the remote control 104 is very close to the environment in which the user stays, the photo sensor 112 disposed on the remote control 104 can precisely sense the brightness of the environment in which the user stays, such that the display apparatus 102 can precisely adjust the display brightness of the screen 110 to make the user feel more comfortable when he or she is watching the television. Thus, when the brightness of the environment in which the user stays changes, the user only has to press the particular button 116, and the photo sensor 112 of the remote control 104 can automatically sense the change of the brightness of the environment. In addition, the display apparatus 102 can rapidly receive the environment brightness value IS and automatically adjust the display brightness of the screen 110 through the wireless transmission. Consequently, the user does not have to adjust the display brightness of the screen 110 manually when the brightness of the environment changes. In addition to eliminate the inconvenience of the user, the invention further has the advantage of precisely adjusting the display brightness of the display apparatus.

While the invention has been described by way of example and in terms of a preferred embodiment, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A display system, comprising:
a remote control, comprising:
a photo sensor for generating an environment brightness value, the photo sensor senses a brightness of the environment in which the remote control is located;
and
a wireless transmitting module coupled to the photo sensor for outputting the environment brightness value by wireless transmission; and
a display apparatus, comprising:
a screen for image displaying;
a wireless receiving module for receiving the environment brightness value; and
a microprocessor coupled to the screen and the wireless receiving module for adjusting a display brightness of the screen according to the environment brightness value.

2. The display system according to claim 1, wherein the wireless transmitting module and the wireless receiving module are an infrared transmitting module and an infrared receiving module, respectively.

3. The display system according to claim 1, wherein the wireless transmitting module and the wireless receiving module are a bluetooth wireless transmitting module and a bluetooth wireless receiving module, respectively.

4. The display system according to claim 1, wherein the display apparatus further comprises a memory for storing a look-up table, which records a relationship between the environment brightness value and the display brightness, and the microprocessor adjusts the display brightness of the display apparatus according to the look-up table.

5. The display system according to claim 1, wherein the display apparatus is a liquid crystal television.

6. The display system according to claim 1, wherein the display apparatus is a plasma television.

7. The display system according to claim 1, wherein the display apparatus is a cathode ray tube television.

8. A method of auto-adjusting a display brightness of a display apparatus, the method comprising:
providing a remote control having a photo sensor;
sensing a brightness of the environment in which the remote control is located by the photo sensor, and generating an environment brightness value when a particular button of the remote control is triggered;
transmitting the environment brightness value from the remote control to the display apparatus by wireless transmission; and
adjusting the display brightness of the display apparatus according to the environment brightness value.

9. The method according to claim 8, wherein in the step of outputting the environment brightness value to the display apparatus, the environment brightness value is outputted by infrared transmission.

10. The method according to claim 8, wherein in the step of adjusting the display brightness of the display apparatus according to the environment brightness value, the display apparatus adjusts the display brightness of the display apparatus according to a look-up table, which records a relationship between the environment brightness value and the display brightness.
